Europäisches Patentamt

European Patent Office

Office européen des brevets

(19)

(11) Publication number: **0 291 348**
**A2**

(12) # EUROPEAN PATENT APPLICATION

(21) Application number: 88304385.3

(22) Date of filing: 13.05.88

(51) Int. Cl.4: **C 08 L 71/02**
C 08 L 67/00, C 08 J 3/00
//(C08L71/02,27:06),
(C08L67/00,27:06)

(30) Priority: 15.05.87 IT 4100587

(43) Date of publication of application:
17.11.88 Bulletin 88/46

(84) Designated Contracting States:
BE CH DE ES FR GB LI NL SE

(71) Applicant: MONTEDIPE S.p.A.
31, Foro Buonaparte
I-20121 Milan (IT)

(72) Inventor: Andreola, Piero
Castello 5434
I-30122 Venezia (IT)

Gaiba, Sauro
5, via Gioberti
I-30174 Mestre-Venezia (IT)

Bianchin, Eugenio
7, via Monfenera
I-31100 Treviso (IT)

Mulas, Carlo
8, via Ragusa
I-31021 Mogliano Veneto Treviso (IT)

(74) Representative: Lamb, John Baxter et al
MARKS & CLERK 57/60 Lincoln's Inn Fields
London WC2A 3LS (GB)

(54) Stable dispersions of polyols containing polyvinylchloride and process for preparing them.

(57) A stable polyvinyl chloride/polyol dispersion containing from 1 to 50% by eight of polyvinylchloride and having a viscosity lower than 10,000 mPa.s characterized in that the polyvinylchloride is in the form of preformed particles soaked by the polyol of the dispersions, and has a particle size of from 1 to 10 micrometres.

The dispersion may be prepared by the steps of

(a) dispersing polyvinylchloride in a polyol by mechanical stirring; and

(b) milling the so-obtained dispersion by means of repeated passes through a milling machine.

EP 0 291 348 A2

## Description

## STABLE DISPERSIONS OF POLYOLS CONTAINING POLYVINYLCHLORIDE AND PROCESS FOR PREPARING THEM

The present invention relates to stable dispersions of polyvinylchloride in polyols and to the production thereof.

More particularly the present invention relates to stable polyvinylchloride/polyol dispersions, which are particularly suitable for prodcing elastomeric polyurethanes and/or rigid or flexible polyurethane foams.

Elastomeric polyurethanes and polyurethane foams are produced by reacting a polyol with an organic polyisocyanate, usually in the presence of one or more blowing agents, activating agents (such as tertiary amines and/or organometalic compounds), emulsifiers, etc.

It is known that in order to improve the physical characteristics of polyurethanes (such as their ageing resistance their elastic modulus and the dependence of this latter on temperature) to disperse polymer particles throughout the polymeric matrix. In general, the polymer particles are dispersed in the polyol before it is reacted with the polyisocyanate.

British patent No. 1,040,452 describes the preparation of polymer/polyol dispersions by polymerizing an ethylenically unsaturated monomer, from which the polymer is derived, directly in the polyol. For this purpose, the ethylenically unsaturated monomer is dissolved or dispersed in the polyol in an amount of from 1 to 60% by weight, and it is subsequently polymerized while it is mixed with polyol. The polymerization is carried out in the presence of conventional initiators, e.g. peroxides such as lauryl-peroxide, benzoyl-peroxide or di-cumyl-peroxide: nitrogen-containing initiators, such as azo-bis-isobutyronitrile; redox systems; and high-energy radiation.

According to British patent No. 1,040,452 any ethylenically unsaturated monomers, containing one or more double bond(s) can be used to produce the polymer particles. Examples of such monomers are: styrene and the vinyl aromatic vinyl monomers in general; olefinic or diolefinic hydrocarbons, such as ethylene, propylene, 1-butylene, 2-hexene, 1,3-butadiene and 2-pentene: vinyl esters, such as vinyl acetate or vinyl propionate; vinyl halides, such as vinyl chloride or vinylidene chloride; and acrylic acid, methacrylic acid and their esters or nitriles such as methacrylates, acrylates and acrylonitrile. These monomers may be used alone or in admixture.

When the polyurethanes filled with polymers are prepared from a polymer/polyol dispersion one necessary condition is that the polymer particles which are formed be homogeneously and stably dispersed throughout the polyol, so as to form an "organosol". Another necessary condition for preparing polymer-filled polyurethanes useful for the required applications, is that the dispersion have not too high a viscosity, e.g. not higher than 10,000 mPa.s, so that it can easily be treated with the organic polyisocyanate, both as such, and as an isocyanate-polyol prepolymer, in conventional equipment and by the usual techniques customarily used for obtaining polymeric particles homogeneously dispersed throughout the mass.

The known processes for obtaining homogeneous polymer/polyol dispersions by "in situ" polymerization, allowed for satisfactory results as to the processability and the physical properties of the obtained product, in the case of some ethylenically unsaturated monomers. In particular, the best results are obtained with acrylonitrile, the dispersions of which are homogeneous and stable over time. On the contrary, in the case of vinyl chloride the dispersions obtained do not show such favourable properties; in fact, owing to the morphology of the particles, the dispersions have a creamy consistency, or contain lumps, so that filtering is necessary before they are treated with the organic polyisocyanate.

Italian Patent No. 1152478 describes homogeneous, stable dispersions of polyvinylchloride in polyol-polyethers obtained by polymerizing vinyl chloride in the liquid phase, and up to a conversion not higher than 40%, without stirring, or with a mild stirring, in the presence of an organic compound which acts as a solvent for monomeric vinyl chloride and as a precipitating agent for polyvinylchloride, and of a polyol having a molecular weight not higher than 10,000.

However, this process also suffers from drawbacks, mainly due to the need to recover unreacted excess monomer which causes not only economic but also safety problems, due to the possible formation of unstable peroxides.

Stable dispersions of one or more thermoplastic polymer(s) or copolymer(s), such as polyvinylchloride, in polyols are disclosed in French Patent No. 2,284,638. According to this patent, stable dispersions are prepared by homogeneously blending the polyol having a hydroxyl index of from 10 to 1,000, with a latex of the thermoplastic polymer or copolymer having a particle size of from 0.02 to 0.8 micrometres. After homogenizing the blend, the water of the latex is evaporated off under vacuum at a temperature below 110°C. The major drawback of the dispersions obtained by this process is that they are unstable in the formulations generally used for preparing polyurethanes. In fact, it has been observed that the particles of polyvinylchloride separate from the dispersion and form lumps which cause drawbacks in subsequent processing of the polyurethane.

We have now found that by using particles of preformed polyvinylchloride, having a size of from 1 to 10 micrometres and having been soaked with the same polyol in which they are dispersed, homogeneous polyvinyl chloride/polyol dispersions, stable over time, can be obtained.

Accordingly, the invention provides a stable polyvinylchloride/polyol dispersion containing from 1 to 50% by weight of preformed polyvinylchloride in particulate form and having a viscosity of less than 10,000 mPa.s in which the polyvinylchloride particles have a size comprising of from 1 to 10 micrometres and are soaked with the same polyol as used for preparing the dispersion.

Polyvinylchloride contents of from 5 to 30% by weight are preferred.

The polyols which can be used in the preparation of the dispersions of the invention are well-known and are commercially available. Examples of polyols include polyolpolyethers, polyolpolyethers containing ester groups, polyolpolyethers containing amino groups, polyolpolyesters etc.

Suitable polyolpolyethers for producing the dispersions of the invention are those of the general formula:

$$HO - (RO - O)_n - H \quad (I)$$

wherein:

R is a divalent alkylene radical containing from 2 to 4 carbon atoms, and

$n$ is an integer of from 2 to such a number as to give a molecular weight of up to 10,000.

Some of the radicals R can be either tri- or polyvalent, whereby branched polyol-polyethers will be obtained.

Such polyol-polyethers, which generally have a viscosity of from 200 to 5,000 mPa.s are obtained by means of the thereal condensation of cyclic oxides, and can be either straight or branched. In practice, polyolpolyethers derived from ethylene oxide and propylene oxide are preferred. The polyolpolyethers can be obtained from a single cyclic oxide, or from different cyclic oxides, so as to form a copolymer.

Polyol-polyethers containing ester groups can also be used in the invention. Such polyol-polyethers are obtained from the above-described polyol-polyethers by replacing, to a limited extent and anyway for not more than 15 monomeric units %, the structural units derived from the cyclic oxides, by structural units derived from aliphatic or aromatic di- or mono- carboxylic acids.

Polyol-polyethers containing ester groups correspond to formula (I) above wherein some of the monomeric units -R-O are replaced by units:

O-R-OOC-R'-COO-R-O

(wherein R' is an aliphatic or aromatic divalent radical containing from 1 to 18 carbon atoms).

In the preparation of the dispersions of the invention, polyethers containing amino groups can also be used. Such amino-group-containing polyethers are the adducts of alkylene oxides with mono- or polyamines, and are preferably obtained by reacting alkylene oxides containing from 2 to 4 carbon atoms with a mono- or polyamine such as methylamine, ethylamine, isopropyl-amine, ethylenediamine, di-ethylene-triamine, butene-diamine, aniline, phenylene-diamine, toluylene-diamine, naphthalene-diamine or an aniline/formaldehyde condensation product.

Polyol-polyesters include those obtained by the condensation of polycarboxylic acids with polyvalent alcohols. Any suitable polycarboxylic acids can be used, such as, e.g., oxalic acid, malonic acid, succinic acid, glutaric acid, adipic acid, pimelic acid, suberic acid, azelic acid, sebacic acid, maleic acid, fumaric acid, glutaconic acid, isophthalic acid, terephthalic acid, hemimellitic acid or 1,4-cyclohexane-dicarboxylic acid. The polyvalent alcohol may be an aliphatic or aromatic alcohol, such as e.g., ethylene glycol; 1,3-propylene glycol; 1,2-propylene glycol; 1,4-butylene glycol, 1,3-butylene glycol; 1,2-butylene glycol; 1,5-pentane-diol; 1,6-hexane-diol; glycerol; 1,1,1-trimethylolpropane; 1,1,1-trimethylol-hexane; 1,2,6-triol-hexane; pentaerythritol and sorbitol. The term "polyvalent alcohols" also includes compounds derived from phenol, such as bisphenol A.

Among polyesters, there may also be mentioned caprolactones and caprolactones modified by copolymerization with an alkylene oxide.

The term "polyvinylchloride", as used herein is intended to refer to both vinyl chloride homopolymer, and those copolymers which contain at least 50% by weight of vinyl chloride, the balance being one or more ethylenically unsaturated monomers copolymrizable with vinyl chloride. The term "ethylenically unsaturated monomer", means an organic compound containing a C=C group.

Examples of unsaturated compounds are vinyl and vinylidene compounds, such as vinylidene fluoride, vinylidene chloride and vinyl fluoride; vinyl esters of aliphatic carboxylic acids containing from 2 to 18 carbon atoms such as the vinyl estes of acetic acid propionic acid; acrylic monomers such as acrylic acid, methacrylic acid and their derivatives, such as acrylonitrile, acrylates and methacrylates of aliphatic alcohols containing fro 1 to 12 carbon atoms; and allylic compounds such as allyl acetate, allyl chloride and allyl-ethyl ether.

The polyvinylchloride can be obtained by any known polymerization technique, such as, e.g., by emulsion, suspension, or bulk polymerization.

Polyvinylchloride produced by an emulsion polymerization process and having a particle size or agglomerates size of less than 50 micrometres, is preferred for the preparation of the dispersions of the invention.

The dispersions of the invention may be prepared by any process which make it possible for the particles of polyvinylchloride to be milled down to a size from 1 to 10 micrometres, and to be soaked with the polyol. In particular, processes which allow the milling operation to be carried out without an excessive increase in temperature (which would lead to the formation of high-viscosity organosols) are preferred.

A preferred process for preparing the dispersions of the invention consists in dispersing polyvinylchloride in the polyol by mechanical stirring. The thus obtained dispersion is then milled in a milling machine, which can be a roll milling machine, a gear mill, a colloid mill or a microsphere mill, as generally used for preparing inks, toothpastes, master-batches, and so forth.

In order to maintain the temperature, during the milling process, at a value not higher than 50°C, the equipment is preferably surrounded by a jacket through which a coolant is circulated.

The residence time of the dispersion inside the milling machine will generally be of the order of from 0.1 to 10 minutes, and can vary according to the desired particle size and soaking degree.

As an alternative, the components of the dispersion can be separately fed to the milling machine or to the microsphere mill.

In order that the invention may be well understood the following examples are given by way of illustration only.

In the Examples, the stability over time of the polyol-polyvinylchloride dispersions was measured by determining the amount of residue after centrifugation. For this purpose, 40 g of the product were placed in a test tube (100 x 45 mm) and centrifuged for 30 minutes at 6,500 rpm.

After centrifuging, the upper portion of the dispersion was removed by tilting the test tube, until the residue has a constant weight. The residue was weighed and expressed as a percentage by weight of the starting product. Obviously. the lower the percentage of residue, the higher the stability of the dispersion.


## EXAMPLE 1

Into a mixer of 200 litres, equipped with a propeller stirrer, there were charged:

(a) 20 kg of polyvinylchloride, obtained by emulsion polymerization, having a molecular weight of 50,000 and the following characteristics:

number average particle size = 3.79 micrometres,

volumetric average diameter = 5.7 micrometres;

ratio of volumetric average diameter to surface areas 9.35; and

(b) 80 kg of a polyol-polyether obtained by condensing ethylene oxide and propylene oxide in a 1:4 ratio, and having a molecular weight of 5,000 and a hydroxyl number of 32 mg KOH/g.

The mixture was stirred at 100 rpm for 15 minutes.

The thus obtained mixture was fed to Z21 roll milling machine made by MOLTENI (Milan, Italy), provided with 400 x 180 cm rollers.

The mechanical blend was fed to the milling machine at a flow rate of 7 kg/hour, a pressure of 70 kg/cm$^2$ being maintained between the rollers.

The blend was processed by three successive passes through the same milling machine and under the same conditions.

These were obtained 100 kg of a homogeneous organosol of polyvinylchloride in polyol-polyether, with a polyvinylchloride content of 20% by weight and a viscosity of 1,900 mPa.s at 25°C. The particles of polyvinylchloride were homogeneously dispersed, had a spheroidal shape, and had an average size of 5 micrometres.

The stability of the dispersions, when determined as a residue percentage by on centrifugation was 6%.

The time during which 1% of polyvinylchloride precipitated was 180 days.


(Comparative) Example 2

The mixture of Example 1 was prepared by simple mixing at 100 rpm for 15 minutes.

The mixture obtained had a viscosity of 3,500 mPa.s at 25°C and showed a stability, determined as the residue percentage on centrifugation, of 21%. The average size of the polyvinylchloride was 30 micrometres.

The time for 1% of polyvinylchloride to precipitate was 10 days.


## Example 3

The following formulation was prepared for the production of a polyurethane flexible foam by cold moulding:

|  | Parts by weight |
|---|---|
| -polyvinylchloride-containing polyol-polyether | : 125 |
| -silicone surfactant TEGO B 4113 (TR. Goldschmidt AG) | : 0.5 |
| -water | : 3 |
| -crosslinking agent (triethanolamine) | : 0.5 |
| -algofrene 11 (trichloro-monofluoro-methane | : 11 |
| -aminic catalyts: | : 0.5 |
| -Niax C174 (UNION CARBIDE) | |
| -Dabco 33 LV (33% in dipropyleneglycol) (AIR PRODUCTS) | : 1.1 |

The formulated material, after storage for 170 days, showed no precipitate.

## Claims

1. A stable polyvinyl chloride/polyol dispersion containing from 1 to 50% by weight of polyvinylchloride and having a viscosity lower than 10,000 mPa.s characterized in that the polyvinylchloride is in the form of preformed particles soaked by the polyol of the dispersions, and has a particle size of from 1 to 10 micrometres.

2. A dispersion according to claim 1 characterised in that it contains from 5 to 30% by weight of polyvinylchloride.

3. A dispersion according to claim 1 or claim 2, characterised in that the polyol is a polyol-polyether of the formula:

HO - (R - O)$_n$ - H

(wherein R is a divalent alkylene radical containing from 2 to 4 carbon atoms, and $n$ is an integer of from 2 to such a number as to yield a molecular weight of up to 10.000; the polyol-polyether preferably having a viscosity of from 200 to 5,000 mPa.s.

4. A dispersion according to claim 3 characterized in that the polyol-polyether is an ester group-containing polyol-polyether and contains repeating units of the formula:

O-R-OOC-R'-COO-R-O

(wherein R has the meaning defined in claim 3 and R' is a divalent aliphatic or aromatic radical containing from 1 to 18 carbon atoms).

5. A dispersion according to claim 3 characterised in that polyol-polyether contains amino groups, and is obtained by reacting an alkylene oxide containing from 2 to 4 carbon atoms with a mono- or polyamine, or the polyolpolyether contains end amino groups.

6. A dispersion according to claim 1 or claim 2 characterised in that the polyol is a polyol-polyester obtained by reacting a polycarboxylic acid with a polyvalent alcohol.

7. A dispersion according to any one of the preceding claims, characterised in that the polyvinylchloride is a homopolymer of vinyl chloride or a copolymer containing at least 50% by weight of vinyl chloride, the balance being one or more ethylenically unsaturated monomers copolymerizable with vinyl chloride.

8. Dispersions according to claim 9, wherein polyvinylchloride is obtained by emulsion polymerization, and is in the form of particles, or of agglomerates thereof, having a size smaller than 50 micrometres.

9. A process for preparing a dispersion according to any one of the preceding claims, characterised in that it comprises:

(a) dispersing polyvinylchloride in a polyol by mechanical stirring; and

(b) milling the so-obtained dispersion by means of repeated passes through a milling machine.

10. A process according to claim 9 characterised in that the milling machine is a roll milling machine, a colloid mill, a gear mill, or a microsphere mill.

11. A process according to claims 9 or 10 characterised in that the temperature is maintained at less than 50°C during the milling process.

12. A process according to any one of claims 9-11 characterised in that the residence time of the dispersion in the milling machine is from 0.1 to 10 minutes.